# EUROPEAN PATENT APPLICATION

(11) **EP 2 796 603 A1**
(43) Date of publication of application: **29.10.2014**
(21) Application number: 11877968.5
(22) Date of filing: 21.12.2011
(51) Int. Cl.: D04H 1/54, D04H 1/485

(54) **NEEDLE-PUNCHED NON-WOVEN FABRIC, MANUFACTURING METHOD THEREOF AND FILTER AND SOUND ABSORBING MATERIAL FORMED THEREBY**

(71) Applicant: Fairtech Investment Limited, Wanchai, Hong Kong (CN)
(72) Inventor: NG, Ying Yuk, Hong Kong (CN)
(74) Representative: Gosnall, Toby
(86) International application number: PCT/CN2011/084323
(87) International publication number: WO 2013/091184

(57) **Abstract**

The present invention provides a novel needle-punched nonwoven felt fabric which is made of same or substantially similar melting point short fibers of same type or different types, preferably made of one melting point short fibers of same type, wherein the felt fabric is stiff enough to be self-sustaining and has the ability of shape maintenance. The felt fabric exhibits excellent pleatability, moldability and compressive strength. The invention also provides a method for manufacturing the felt fabric, and a filter comprising the felt fabric used as the material of a filter element of the filter, wherein the filter element requires no support structure to stand alone and persistently retains its shape. The present invention further provides use of the felt fabric as a sound absorbing material.

## Description

### Field of the Invention

The present invention relates to a nonwoven fabric, a method for manufacturing the nonwoven fabric, a filter comprising the nonwoven fabric used as a material for making a filter element of the filter, and use of the nonwoven fabric as a sound absorbing material. The nonwoven fabric according to the invention exhibits excellent hardness, stiffness, moldability and compressive strength.

### Background of the Invention

Nonwoven fabric is a cloth that is neither woven nor knitted. The nonwoven fabric exhibits good filterability, permeability and absorbability, and therefore is suitable to be used as a filter element of a filter.

Currently available needle-punched felt fabrics are texturally soft and pleats cannot be made thereon. Therefore, they cannot be used to produce a pleat-shaped filter in order to increase filtration area. The currently available needle-punched felt fabrics do not have the moldability, namely cannot be molded into various shapes or configurations or cannot retain their shapes and configurations after molded.

Therefore, there has been no pleatable felt that has a stiffness sufficient for shape maintenance, exhibits excellent moldability, and is self-sustaining in the prior art. It has also not been found in the prior art that a pleat-shaped filter comprises a filter medium made of the felt, which is self-sustaining without the need of a supporting structure.

The PCT international patent application no. PCT/CN2011/071371 that the applicant submitted on 28 February 2011 discloses a nonwoven felt fabric, a manufacturing method thereof and a filter formed therefrom. The nonwoven felt fabric of this earlier application is made of at least one low-melting-point short fiber and at least one high-melting-point short fiber, characterized in that the layer of the low-melting-point fiber is a solidifiable material, particularly capable of solidifying after being heated and melted so that the felt fabric formed in such way is self-sustaining and has the ability of shape maintenance. The felt fabric is stiff enough to be self-sustaining and have the ability of shape maintenance, and the felt fabric is also moldable. The felt fabric has excellent hardness or stiffness, remarkable moldability and high compression strength. Moreover, the needle-punched felt fabric of the earlier application is pleated to be used in a pleat-shaped filter to increase the filtration area without any supporting structure.

However, the manufacturing of the needle-punched felt fabric disclosed in the aforementioned PCT international patent application requires the use of short fibers having two different melting points, wherein more materials are required and the manufacturing process is relatively complicated, making the cost higher.

It is well-known that sound often produces echoes in indoor space. For example, hard walls and wide space (e.g. hall, classroom, stadium, cinema and the like) will all produce reflection noise due to greater echo, so that sound continuously overlaps or becomes unclear. To eliminate such phenomenon so as to make sound distinct, sound absorbing materials have to be mounted on the surface of walls or the surface of ceiling to reduce production of echo. The sound absorbing materials are porous and permeable materials, for example, glass fiber, rockwool, sponge, foam and the like. However, glass fiber is known to be harmful to human beings and the environment, and is prone to weathering, causing reduced sound absorbability and a short life time. Rockwool and sponge have low sound absorbability, are prone to deform, are inflammable and release poisonous gas when being burnt. Therefore, it is necessary to provide a sound absorbing material having the features of high sound absorbability, fire retardant, stable shape, light weight, etc.

### Summary of the Invention

An object of the present invention is to provide a nonwoven felt fabric which is easy to manufacture at low cost so as to overcome the shortcomings of the prior art, while still having excellent hardness, stiffness, moldability and high compressive strength sufficient for molding into components such as self-sustaining filter elements of different shapes.

Another object of the present invention is to provide a method for manufacturing the above nonwoven felt fabric and a filter comprising the nonwoven felt fabric used for the filter element of the filter.

These and other objects and advantages of the present invention are achieved by providing a nonwoven felt fabric that is made of same or substantially similar melting point short fibers of same type or different types, and preferably made of one melting point short fibers of same type. The felt fabric is still stiff enough to be self-sustaining and has the ability of shape maintenance, and the felt fabric is also moldable.

Theoretically, a short fiber of any melting point, for example, polyesters, terylene, polypropylene, nylon, acrylic, polyamide fibres, rayon fibres, acrylic fibres, polyethylene, and polyvinyl chloride, can be used in the present invention. However, in practice, since the operating temperature of a product (like a filter) made of the felt fabric according to the invention is typically room temperature (25°C) or reaches up to tens of degrees Celcius and even up to 100°C, the melting point of the short fiber to be used for manufacturing the felt fabric typically has to be above 80°C or 100°C.

Preferably, the short fiber is polypropylene (PP), having a melting point of approximately 130°C. Polypropylene is a crystalline polymer. Although the melting points of various crystalline forms of polypropylene range approximately from 150°C to 176°C, practically, for example randomly copolymized polypropylene which has a lowered melting point of approximately 130°C, may be used as the short fiber of the invention.

Preferably, the felt fabric is made by forming a fabric blank of the short fibers; subjecting the fabric blank to a short-time heating treatment at a temperature that is higher than a melting point of the short fibers, so that a portion of the short fibers is heated into a molten state to get entangled in the remaining unmelted portion of the short fibers; and cooling down quickly and solidifying the fabric blank. The remaining steps can be basically the same as the manufacturing steps in the application no. PCT/CN2011/071371 mentioned above.

For the polypropylene short fiber, the temperature of the heating treatment ranges for example from 130°C to 160°C or from 180°C to 200°C. The short-time heating treatment herein is to control the retention time of the fabric blank inside an oven, for example the fabric blank is allowed to pass through the oven at the temperature of the heating treatment at a speed of approximately 4 to 5 meters of the fabric blank per minute, for example, the fabric blank is heated at a speed of approximately 30 seconds per square meter of fabric blank, thereby a portion of the short fiber in the fabric blank melts and the melted portion accounts for around 30% to 80% of the fabric blank, preferably 60% to 70% of the fabric blank. Afterward, the fabric blank is quickly cooled down to solidify and harden into a nonwoven felt fabric with a single melting point.

When it is necessary for molding the single melting point felt fabric into a desired shape, the felt fabric may be slightly heated at a temperature below the melting point of the short fiber, for example at 100°C for polypropylene short fiber, to become softened but not melted so as to provide the ease of molding the felt fabric into the desired shape.

The felt fabric can be a needle punched fabric or a water-jet punched fabric.

The felt fabric of the present invention is suitable to be used as a filter element of gas-solid filters or liquid-solid filters. Thus, the present invention further provides a filter comprising the felt fabric of the present invention used as the material of a filter element of the filter, wherein the filter element is self-sustaining and requires no supporting structure.

The present invention further provides a method for manufacturing a needle-punched non-woven felt fabric, comprising the steps of:
1) blending evenly same or substantially similar melting point short fibers of same type or different types to obtain a layer of fiber, wherein the short fibers can be of only one type;
2) carding the blended fibers on a carding machine;
3) feeding the carded fibers into a web forming machine to produce a fiber web;
4) subjecting the fiber web to a forming treatment to form a fabric blank;
5) subjecting the fabric blank to a short-time heating treatment at a temperature that is higher than the melting point of the short fiber, so that a portion of the short fibers melts into a molten state and the molten portion of the short fibers gets entangled in a remaining unmelted portion of the short fibers, wherein the molten portion of the short fibers accounts for around 30% to 80%, preferably 60% to 70%, of the fabric blank; and
6) cooling down the heated fabric blank to solidify the molten short fibers, so as obtain the felt fabric.

As mentioned above, polypropylene short fibers may be used as the short fibers of the invention, whose melting point is approximately 130°C or ranges from 150°C to 176°C. The temperature of the heating treatment ranges for example from 130°C to 160°C or from 180°C to 200°C, respectively. In order to achieve a state in which a portion of the short fibers melts and gets entangled in the remaining unmelted portion of the short fiber, the fabric blank is processed by allowing the fabric blank to pass through an oven at the temperature of the heating treatment at a certain speed, for example approximately 4 to 5 meters of the fabric blank per minute, i.e. by heating the fabric blank at a speed of approximately 30 seconds per square meter of fabric blank, thereby approximately 30% to 80% by weight, preferably 60% to 70% by weight, of the short fibers in the fabric blank melts.

The heating treatment can comprise blowing hot air vertically to upper and lower surfaces of the fabric blank so as to allow the hot air to directly pass through the fabric blank, in order that the portion of the fiber inside the fabric blank is better heated.

The cooling step comprises applying a cooling roller of for example 200 kg in weight which is gravitationally or hydraulically pressed downwardly against the fabric blank to quickly cool down the fabric blank.

In step 4) of the aforementioned manufacturing method, the forming treatment may be selected from needle punch, water jet punch, thermal-sealing, thermal-bonding, pulp air-laid, wet processing and stitch bonding.

The felt fabric of the present invention can have a Shore A hardness of up to 50 HA to 80 HA. The gram weight of the felt fabric ranges from 250 g/m² to 3000 g/m².

It has been tested that the felt fabric of the present invention was found to have a hardness which is comparable to that of the felt fabric formed from high-melting-point short fiber and low-melting-point short fiber in the aforementioned international patent application PCT/CN2011/071371, and sufficient for making products such as self-sustaining filters and allows for pleating thereon. Compared with the aforementioned prior art, the present invention employs only the same melting point short fibers, which can obviously reduce material cost and manufacturing cost and can save manufacturing time as well.

### Detailed Description of Embodiments

The present invention is an improvement of the technical solution taught in the PCT international patent application no. PCT/CN2011/071371 submitted by the same applicant, the contents of which are incorporated herein by reference in its entirety. What is discussed hereinbelow is the technical information that cannot be found in the application no. PCT/CN2011/071371, and the technical information not discussed in greater detail may be made reference to the application no. PCT/CN2011/071371.

The present invention relates to a nonwoven felt fabric manufactured by for example a needle punch method using short fibers. The felt fabric has excellent hardness or stiffness. The felt fabric also exhibits remarkable moldability, capable of maintaining its shape or configuration after having been molded into any shape or configuration. The felt fabric formed by the needle punch method is called needle-punched felt, while a felt generally refers to a sheet formed by tightly bonding wool or fleece.

In general, the method for manufacturing the felt fabric of the present invention comprises a step of forming a fabric blank and a step of treating the fabric blank formed.

The step of forming a fabric blank comprises putting the cotton-like short fibers into a carding machine for carding and then feeding the short fibers into a web forming machine to produce a fiber web. The fiber web may comprise one type of same melting point short fibers, or same type or different types of same or substantially similar melting point short fibers. Then, the fiber web is subjected to a needle punch treatment to form the fabric blank which will be used in the next step.

The step of treating the fabric blank comprises heating the fabric blank in an oven at a temperature that is higher than the melting point of the short fibers and controlling the retention time of the short fibers in the oven, so that a portion of the short fibers melts. The key of the method for manufacturing the single-melting-point felt fabric according to the invention is the heating treatment step which is carried out such that a portion of the fabric blank melts while the remaining portion of the fabric blank does not melt. In this way, the molten portion of the short fibers would get tangled in the unmelted portion of the short fibers, whereby a configuration that the molten short fibers are arranged between the unmelted short fibers is created in the fabric blank. Then, the heated fabric blank is subjected to a cooling treatment to solidify the molten short fibers to obtain the felt fabric of the invention.

In a preferred embodiment of the invention, polypropylene, whose melting point is approximately 130°C or ranges from 150°C to 176°C, is employed as the short fibers of the invention. In this case, the temperature of the heating treatment can approximately range from 130°C to 160°C or from 180°C to 200°C, respectively; and the cooling temperature can approximately range from 10°C to 15°C. In the heating treatment step, the polypropylene fabric blank is allowed to pass through the oven at the temperature of the heating treatment at a speed of approximately 4 to 5 meters per minute, i.e. the fabric blank is heated at a speed of approximately 30 seconds per square meter of the fabric blank, thereby 30% to 80% by weight, preferably 60% to 70% by weight, of the short fibers melts, and 20% to 70% by weight, preferably 30% to 40% by weight, of the short fibers remains in the unmelted state. It would be appreciated that the retention time of the fabric blank inside the oven can be adjusted according to the gram weight of that fabric blank and the required hardness.

The heating treatment preferably comprises blowing vertically hot air to the upper and lower surfaces of the fabric blank so as to allow passage of the hot air through the fabric blank, in order that the short fibers inside the fabric blank is better heated. The cooling treatment is preferably performed in a very short time. For example, a cooling roller of 200 kg may be applied gravitationally or hydraulically (for instance for a felt fabric having a bigger gram weight) to press downwardly against the fabric blank so that the cooling is carried out at a faster rate. In this way, the fabric blank can be cooled down from about 150°C to about 15°C in 5 to 15 seconds to densify the fabric.

If desirable, the obtained felt fabric can be pleated in order to form a filter element in a pleated shape.

In addition, crystalline nucleus agents, delustering agents, pigments, fungicidal agents, antibacterial agents, flame retardants, hydrophilic agents or the like can be added into the felt fabric of the invention in order for enhanced performance of the fabric or to satisfy the particular applications. Patterns or graphics can be imprinted on the felt fabric by for example an emboss roller.

As an alternative, PTFE (polytetrafluoroethylene) membrane or acrylic coatings can be applied to the surface of the felt fabric of the invention, in order to increase the smoothness of the fabric. This is also beneficial to brush off and clean the dust attached to the cylindrical filter medium.

A Model A Shore Durometer was used to measure the hardness of the felt fabric of the invention. It is found that the hardness of the felt fabric is up to 50 to 80 HA, which is sufficient for supporting the felt fabric itself and allows the formation of pleats.

The processes of forming the fabric blank, for example needle punch, water jet punch, thermal-bonding, pulp air-laid, wet processing or stitch bonding, are well known in the art and therefore not described in detail herein.

The felt fabric of the present invention is characterized by good filterability, permeability, light weight, high hardness, high compressive strength, moldability, shape maintenance, and pleatability, and is therefore suitable to be used as a filter medium of the filter. It was tested that the felt fabric of the present invention is capable of retaining its shape or configuration when it is molded into any shape or configuration, and also exhibits a relatively higher hardness, and thus the felt fabric has a dimensional stability. When the felt fabric of the present invention is molded into a filter element of a filter press, the conventional operation processes necessary for the filter press, including sewing and caulking the edge of a filter cloth, sewing up a cord and hammering it into a groove formed on the filter plate, feeding the filter cloth through the central through hole of the filter plate and then stretching it out and the like, can be eliminated. Therefore, the labor intensity and costs for implementing, assembling and replacing the filter is greatly reduced. Moreover, the filter elements mounted on two sides of the filter plate are independent from each other, so either of the two filter elements can be replaced or handled individually.

As discussed above, the felt fabric of the present invention is characterized by high-density porosity and good permeability, which results in excellent sound absorption. Therefore the felt fabric of the present invention can be used as a sound absorbing material. The felt fabric of the present invention has the advantages of good shape stability, light weight, ability of being molded into different shapes, ease to be mounted, and no harm on and no pollution to human beings and the environment, is thus an excellent environmentally friendly sound absorbing material.

In summary, the felt fabric of the present invention is an alternative of the felt fabric produced from the short fibers having two different melting points described in the international application no. PCT/CN2011/071371. Both felt fabrics may find the substantially same applications and can be used to manufacture the substantially same products.

The felt fabric of the present invention has the following features: light weight, high hardness, high compressive strength, moldability, shape maintenance, etc, and thus can be molded into the filter element of various desired shape. The molded filter element not only can maintain its molded shape and provide sufficient compression strength, but also substantially simplifies the implementing and replacement of the filter element, thereby the labor intensity and operation costs is reduced. When used as a sound absorbing material, the felt fabric of the present invention is easy to be mounted, has stable sound absorption and causes no harm to human beings and the environment.

While the embodiments described herein are intended as exemplary nonwoven felt fabric of high hardness and its production as well as the filter made from the felt fabric, it will be appreciated by those skilled in the art that the present invention is not limited to the embodiments illustrated. Those skilled in the art will envision many other possible variations and modifications by means of the skilled person's common knowledge without departing from the scope of the invention, however, such variations and modifications should fall into the scope of this invention.

## Claims

1. A needle-punched nonwoven felt fabric which is made of same or substantially similar melting point short fibers of same type or different types, wherein the felt fabric is stiff enough to be self-sustaining and has the ability of shape maintenance, and the felt fabric is also moldable.

2. The needle-punched felt fabric as claimed in claim 1, wherein the felt fabric is produced by forming a fabric blank of the short fibers; subjecting the fabric blank to a short-time heating treatment at a temperature that is higher than a melting point of the short fibers, so that a portion of the short fibers is heated into a molten state to get entangled in a remaining unmelted portion of the short fibers; and cooling down quickly and solidifying the fabric blank.

3. The needle-punched felt fabric as claimed in claim 1 or 2, wherein the felt fabric is produced by the same melting point short fibers.

4. The needle-punched felt fabric as claimed in claim 3, wherein polypropylene whose melting point is approximately 130°C or ranges from 150°C to 176°C is employed as the short fibers.

5. The needle-punched felt fabric as claimed in claim 1, wherein 30% to 80% by weight of the short fibers, preferably 60% to 70% by weight of the short fibers, is heated to melt.

6. The needle-punched felt fabric as claimed in claim 1, wherein the felt fabric has a Shore A hardness of 50 HA to 80 HA.

7. The needle-punched felt fabric as claimed in claim 1, wherein the felt fabric has a gram weight ranging from 250 g/m² to 3000 g/m².

8. The needle-punched felt fabric as claimed in claim 1, wherein the felt fabric is pleatable.

9. The needle-punched felt fabric as claimed in claim 1 or 2, wherein the short fibers are selected from the group consisting of polyesters, terylene, polypropylene, nylon, arclyric, polyamide fibres, rayon fibres, acrylic fibres, polyethylene, and polyvinyl chloride.

10. A filter comprising the needle-punched nonwoven felt fabric as claimed in any of claims 1 to 9 used as a material of a filter element of the filter.

11. Use of the needle-punched felt fabric as claimed in any of claims 1 to 9 as a sound absorbing material.

12. A method for manufacturing a needle-punched nonwoven felt fabric as claimed in any of claims 1 to 9, comprising the steps of:
(1) blending evenly same or substantially similar melting point short fibers of same type or different types to obtain a layer of fiber, wherein the short fibers can be of only one type;
(2) carding the blended fibers on a carding machine;
(3) feeding the carded fibers into a web forming machine to produce a fiber web;
(4) subjecting the fiber web to a forming treatment to form a fabric blank;
(5) subjecting the fabric blank to a short-time heating treatment at a temperature that is higher than the melting point of the short fiber, so that a portion of the short fibers melts into a molten state and the molten portion of the short fibers gets entangled in a remaining unmelted portion of the short fibers, wherein the molten portion of the short fibers accounts for around 30% to 80%, preferably 60% to 70%, of the fabric blank; and
(6) cooling down the heated fabric blank to solidify the molten short fibers, so as obtain the felt fabric.

13. The manufacturing method as claimed in claim 12, wherein the same melting point short fibers are used in step 1).

14. The manufacturing method as claimed in claim 13, **characterized in that** polypropylene whose melting point is approximately 130°C or ranges from 150°C to 176°C is used as the short fibers; the temperature of the heating treatment ranges from 130°C to 160°C or from 180°C to 200°C, respectively; and the cooling step is carried out at a temperature ranging from 10°C to 18°C;
wherein the heating treatment comprises allowing the fabric blank to pass through an oven at the temperature of the heating treatment at a speed of 4 to 5 meters of the fabric blank per minute, i.e. processing the fabric blank by heating the fabric blank at a speed of approximately 30 seconds per square meter of fabric blank, thereby 30% to 80% by weight, preferably 60% to 70% by weight, of the short fibers melts, while 20% to 70% by weight, preferably 30% to 40% by weight, of the short fibers remains unmelted.

15. The manufacturing method as claimed in claim 12, wherein the heating comprises blowing vertically hot air to upper and lower surfaces of the fabric blank so as to allow passage of the hot air through the fabric blank, in order that the short fibers inside the fabric blank is heated.

16. The manufacturing method as claimed in claim 12, wherein the cooling comprises applying a cooling roller which is gravitationally or hydraulically pressed downwardly against the fabric blank to enable the cooling at a fast speed.

17. The manufacturing method as claimed in claim 12, wherein the felt fabric is pleated to make pleats thereon.

18. The manufacturing method as claimed in claim 12, wherein, in step 4), the forming treatment is selected from the group consisting of processes of needle punch, water jet punch, thermal-sealing, thermal-bonding, pulp air-laid, wet processing and stitch bonding.
